# EUROPEAN PATENT APPLICATION

(11) **EP 4 726 807 A1**
(43) Date of publication of application: **15.04.2026**
(21) Application number: 24895607.0
(22) Date of filing: 26.06.2024
(51) Int. Cl.: H01M 4/36, H01M 4/62, H01M 4/48

(54) **NEGATIVE ELECTRODE MATERIAL AND PREPARATION METHOD THEREFOR, AND BATTERY**

(30) Priority: 29.11.2023 CN 202311628160
(71) Applicant: BTR New Material Group Co., Ltd., Shenzhen, Guangdong 518106 (CN)
(72) Inventor: LI, Fangru, Shenzhen, Guangdong 518106 (CN); DENG, Zhiqiang, Shenzhen, Guangdong 518106 (CN); XIE, Wei, Shenzhen, Guangdong 518106 (CN); GUO, Songtao, Shenzhen, Guangdong 518106 (CN); PANG, Chunlei, Shenzhen, Guangdong 518106 (CN); REN, Jianguo, Shenzhen, Guangdong 518106 (CN); HE, Xueqin, Shenzhen, Guangdong 518106 (CN)
(74) Representative: Michalski Hüttermann & Partner Patentanwälte mbB
(86) International application number: PCT/CN2024/101714
(87) International publication number: WO 2025/112504

(57) **Abstract**

The present application provides an anode material, a preparation method thereof and a battery, and relates to the technical field of batteries. The anode material of the present application includes a silicon-based core, and a coating layer at least partially coated on a surface of the silicon-based core; the anode material satisfies that a ratio B:A is 1 to 100, where A is a mass ratio of oxygen to lithium in the anode material, and B is an atomic ratio of oxygen to silicon obtained by test with an X-ray photoelectron spectrometer on the anode material. The preparation method of the anode material includes: reacting a carbon-coated pre-lithiated silicon-based material with an oxidizing agent to obtain the anode material. In the present application, the ratio B:A in the anode material actually represents an oxidation degree on a surface layer of the anode material. A larger ratio indicates a higher degree of surface oxidation, which can reduce the reaction of the silicon-based core with external moisture, as well as the risks of hydrolysis and gas production, so that the water resistance of the anode material is greatly improved, and the ICE and cycle performance of the battery are improved.

## Description

### TECHNICAL FIELD

The present application relates to the technical field of batteries, and particularly relates to an anode material, a preparation method thereof and a battery.

### BACKGROUND OF THE INVENTION

The silicon-based anode material is one of the most promising materials in the next-generation lithium-ion battery applications. However, extensive application of the silicon-based anode material is mainly limited by a huge volume change of the silicon-based anode material accompanying a charge/discharge process, *i.e.,* an excessive expansion rate. The silicon-based anode material has a more promising application prospect due to a smaller volume expansion change than a pure silicon anode material, but the initial coulombic efficiency (ICE) of the silicon-based anode material is relatively low. To address this problem, the silicon-based anode material is often pretreated by pre-lithiation to form lithium silicate, which can increase the pH so that the solution becomes alkaline due to hydrolysis of the lithium silicate while improving the ICE. This may lead to poor processability and poor slurry stability of the pre-lithiated silicon-based anode material in the slurry preparation process, thereby bringing inconvenience to production and restricting large-scale production and application.

Therefore, how to solve the processing problem of the silicon-based anode material in the slurry preparation process is the key to extensive application of the silicon-based anode material.

### SUMMARY OF THE INVENTION

An object of the present application is to provide an anode material, a preparation method thereof and a battery which, by controlling a relationship between the pre-lithiation degree of the anode material and the surface active silicon oxidation degree, can effectively reduce the lithium silicate dissolved outward from the pre-lithiated silicon-based material, and reduce the generation of a higher pH that may destroy stability of aqueous slurry; and reduce the contact between silicon particles in the anode material and water, reduce the risk of gas production, and improve the safety performance of the anode material in a battery.

The present application provides the following technical solutions:

In a first aspect, the present application provides an anode material, including a silicon-based core, and a coating layer at least partially coated on a surface of the silicon-based core;
the silicon-based core contains silicon and lithium silicate, and the anode material satisfies that a ratio B:A is 1 to 100, where A is a mass ratio of oxygen to lithium in the anode material, and B is an atomic ratio of oxygen to silicon obtained by test with an X-ray photoelectron spectrometer on the anode material.

In a second aspect, the present application further provides a preparation method for the anode material of the first aspect, including:
reacting a pre-lithiated silicon-based material having a coating layer with an oxidizing agent to obtain the anode material.

In a third aspect, the present application further provides a battery, including the anode material of the first aspect.

The present application has the following beneficial effects:
In the present application, the mass ratio A of oxygen to lithium in the anode material reflects the pre-lithiation degree, and a smaller A value indicates a higher content of lithium in the anode material, a higher pre-lithiation degree, and a higher possibility of hydrolysis reaction, resulting in an increased pH and reduced processability of the anode slurry. An X-ray photoelectron spectrometer may be used in a test to obtain the atomic ratio of oxygen to silicon in the surface layer of the anode material, and under the condition that the silicon atoms remain unchanged, a larger B value indicates more oxygen atoms in the surface layer of the anode material, *i.e.,* indicates the presence of oxidation reaction and a higher oxidation degree. The ratio B:A actually represents a relationship between the pre-lithiation degree of the anode material and the surface active silicon oxidation degree, and the processability of the anode material can be improved when the ratio is within a certain range. Specifically, the active silicon of a certain oxidation degree in the surface layer of the anode material can reduce the reaction of the core material with external moisture, which, on one hand, can reduce the lithium silicate dissolved outward from the anode material, causing an increased pH of the aqueous anode slurry and damage to the binder; and on the other hand, reduce the contact between the active silicon and water, and reduce the risk of gas production, thereby greatly improving the water resistance of the anode material.

In the preparation method for an anode material of the present application, an oxidizing agent is used to promote in-situ oxidation reaction on the surface of the pre-lithiated silicon-based material, which can increase the oxygen content in the surface layer of the anode material, reduce the reaction of the core material with external moisture, and improve the processability of the anode material. Being simple in process and using raw materials readily available, the preparation method of the present application can be used for large-scale production and preparation.

In the present application, the anode material as described above is used in an anode sheet, and the surface-oxidized anode material greatly delays and inhibits the hydrolysis reaction between the pre-lithiated silicon-based material inside the coating layer and external moisture, so that a more stable anode sheet is obtained.

### BRIEF DESCRIPTION OF THE DRAWINGS

To explain the technical solutions in the examples of the present application more clearly, the drawings to be used in the description of the examples will be briefly described below. It should be understood that only some examples of the present application are shown in the following figures, and should not be considered as limitations to the scope of the present application.

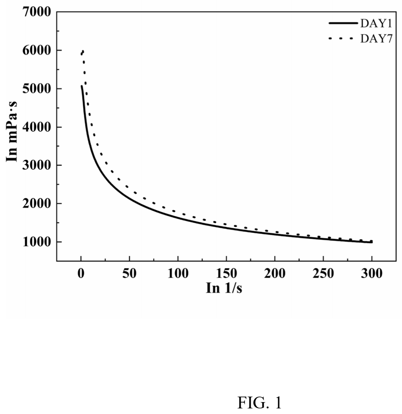

FIG. 1 is a graph showing viscosity changes of an anode slurry made of the anode material of example 1 according to the present application on day 1 and left standing for 7 days.

### DETAIL DESCRIPTION OF THE INVENTION

As used herein, the term "prepared from ..." is synonymous with "including".

As used herein, the terms "include", "comprise", "have", "contain", "containing" and any other variations thereof are intended to cover a non-exclusive inclusion. For example, a composition, step, method, article, or device that includes a list of elements is not necessarily limited to only those elements, but may include other elements not expressly listed or inherent to such compositions, steps, methods, articles, or devices. The conjunction "consisting of ..." excludes any non-specified element, step, or component.

When an amount, concentration, or other value or parameter is expressed as a range, preferred range, or range defined by a list of upper preferable values and lower preferable values, this is to be understood as specifically disclosing all ranges formed from any pair of any upper range limit or preferred value and any lower range limit or preferred value, regardless of whether ranges are separately disclosed. For example, when the range "1 to 5" is disclosed, the ranges described should be interpreted to include the ranges "1 to 4", "1 to 3", "1 to 2 and 4 to 5", "1 to 3 and 5", and the like. When a numerical range is described herein, unless otherwise specified, the range is intended to include the endpoints thereof, and all integers and fractions within the range.

In the examples, the parts and percentages are by mass unless otherwise indicated.

The term "part by mass" means a basic unit of measure indicating a mass ratio relationship of a plurality of components, and 1 part by mass may represent any unit mass, for example, 1g or 2.689g. If *a* parts by mass of an A component and *b* parts by mass of a B component are contained, it indicates that a mass ratio of the A component to the B component is a:b, or that a mass of the A component is aK and a mass of the B component is bK (where K is an arbitrary number, and represents a multiple factor). It should be understood that the sum of parts by mass of all components is not limited to 100, unlike parts by mass.

The term "and/or" is used to indicate that one or both of the illustrated conditions may occur, e.g., A and/or B includes (A and B) and (A or B).

Although the silicon-based anode material containing lithium silicate obtained by pre-lithiation improves the ICE, the hydrolysis of the lithium silicate in the material tends to cause an increased alkalinity of the prepared electrode slurry, which may further cause failure of a binder in the slurry due to the alkaline environment, degraded stability of the slurry, and reduced processability of the anode material. In addition, due to a very high reactivity, the nano silicon in the silicon-based anode material may react with water to generate hydrogen, and the reaction rate may be increased with the alkalinity of the slurry. When lithium silicate in the silicon-based anode material is hydrolyzed, the nano silicon embedded in the lithium silicate is more likely to be exposed and react with water to generate gas, which may further influence coating and processing of the anode slurry as well as performance of the anode sheet.

At present, all solutions for the processing problem of a pre-lithiated silicon-based anode material or an amorphous silicon-based anode material involve secondary coating, where various types of coating layers are used to prevent an internal material from being exposed in an aqueous solution during preparation of an aqueous slurry, so that gas production in the material processing process is alleviated. However, most of the existing secondary coating layers mainly consist of inorganic salts, organic polymer layers or the like, which function only to delay gas production in the slurry. Therefore, there is a need for an improved coating layer on the surface of the anode material, which can reduce the lithium silicate dissolved outward from the silicon-based material, while reducing contact and reaction between the internal nano silicon and water and further improving the processability of the anode material. Even coated, the existing silicon-based anode materials still have certain problems with the processability.

A first aspect of the present application provides an anode material, including a silicon-based core, and a coating layer at least partially coated on a surface of the silicon-based core.

The anode material of the present application contains silicon and lithium silicate. Further preferably, the lithium silicate includes at least one of Li₂SiO₃, Li₂Si₂O₅ or Li₄SiO₄.

It should be noted that the silicon-based core in the anode material of the present application is a pre-lithiated silicon-based material, specifically a pre-lithiated silicon oxide material, which can guarantee a relatively high initial coulombic efficiency of the anode material. The silicon oxide material may be generally represented by a general formula SiOₓ, where 0<x≤2. After pre-lithiating the silicon oxide material to form the silicon-based core, the active oxygen in the material reacts with exogenous lithium to form lithium silicate, which may be at least one of Li₂SiO₃, Li₂Si₂O₅ or Li₄SiO₄. The lithium silicate can save active lithium consumed in the formation of a solid electrolyte interphase (SEI) film on a lithium-ion battery, thereby improving the ICE of the anode material. Meanwhile, the coating layer on the surface of the silicon-based core plays a certain role in isolating moisture, which can reduce the chemical reaction between the silicon-based core and water, and improve the processability of the anode material.

The anode material of the present application satisfies that a ratio B:A is 1 to 100, which may be, for example, 1, 5, 10, 20, 30, 50, 80, 100, or any value between 1 and 100. A is a mass ratio of oxygen to lithium in the anode material, and B is an atomic ratio of oxygen to silicon obtained by test with an X-ray photoelectron spectrometer on the anode material.

In some embodiments of the present application, the anode material has an A value of 1 to 20, which may be, for example, 1, 3, 5, 8, 10, 12, 15, 18, 20, or any value between 1 and 20.

The A value mainly reflects a relationship between a total oxygen content and a total lithium content in the anode material of the present application, and a smaller A value indicates a higher Li content and a higher pre-lithiation degree, but a poorer processability of the anode slurry. Therefore, the key to improving the processability of the slurry is reducing the contact between the silicon-based core and water. The lithium in the anode material of the present application mainly comes from Li₂O, LiₓSi, Li₂SiO₃, Li₂Si₂O₅, Li₄SiO₄, and the like, while the oxygen mainly comes from SiO, Li₂SiO₃, Li₂Si₂O₅, Li₄SiO₄, and the like in the silicon-based core.

In some embodiments of the present application, the anode material has a B value of 1 to 100, which may be, for example, 1, 5, 10, 20, 30, 50, 70, 90, 100, or any value between 1 and 100.

It will be appreciated that the X-ray photoelectron spectrometer is a surface analysis technology which can generally test a region with a thickness no greater than 10 nm on a material surface layer, and therefore, the B value obtained by the test mainly reflects an atomic ratio of O to Si in the surface layer of the anode material. To improve the processability of the anode material, the contact between lithium silicate and active silicon in the silicon-based core and external water should be reduced, and a larger B value indicates a higher oxidation degree of the active silicon in the surface layer of the anode material.

The ratio B:A actually represents a relationship between the pre-lithiation degree of the anode material and the surface active silicon oxidation degree. By controlling the value of B:A, that is, by balancing the pre-lithiation degree and the surface active silicon oxidation degree, while ensuring a relatively high ICE, the anode material of the present application can further effectively reduce the active silicon content in the surface layer of the anode material, reduce contact between the silicon-based core with external water, and further improve the processability of the anode material.

In some embodiments of the present application, the anode material satisfies B>A>1, and the ratio B:A is 2 to 30, which may be, for example, 2, 5, 10, 15, 20, 25, 30, or any value between 2 and 30.

It will be appreciated that when the ratio B:A is 2 to 30, it indicates that the pre-lithiation degree of the anode material and the surface active silicon oxidation degree are both appropriate, which will not influence the electrochemical performance of the anode material while isolating the contact between external substances and the silicon-based core by means of a higher oxidation degree, thereby improving the processability of the anode material. For example, under a given oxidation degree of the active silicon in the surface layer of the anode material, a higher pre-lithiation degree indicates a smaller A value and a larger ratio B:A, and a too high pre-lithiation degree will notably influence the processability. Alternatively, under a given pre-lithiation degree, a higher surface active silicon oxidation degree indicates a reduced active silicon content in the anode material, which tends to cause a very low ICE of the silicon-based material and further influence the electrochemical performance of the anode material.

In some embodiments of the present application, an atomic ratio C of oxygen to lithium is obtained by testing with an X-ray photoelectron spectrometer on the anode material, where C is 1 to 10, which may be, for example, 1, 2, 3, 5, 7, 10, or any value between 1 and 10.

In addition to active silicon, the pre-lithiated silicon-based core surface may further include residual Li metal from the pre-lithiation treatment, which may also react with external water and influence the processability of the anode material. Therefore, the C value is used to represent an atomic ratio of oxygen to lithium in the surface layer of the anode material, and a larger C value indicates a higher oxidation degree of the surface layer of the anode material, and less residual Li metal.

In some embodiments of the present application, the anode material satisfies that a ratio C:A is 0.5 to 10, which may be, for example, 0.5, 1, 2, 3, 5, 7, 9, 10, or any value between 0.5 and 10.

The ratio C:A actually represents a relationship between the pre-lithiation degree of the anode material and the oxidation degree of the surface residual lithium. Under a given pre-lithiation degree, a larger C:A value indicates that the surface residual lithium metal is completely oxidized so that the influence of residual lithium metal on the processability of the anode material can be greatly reduced. However, if the C:A value is too large, it indicates that a too large number of oxygen atoms are present on the surface of the material while the number of lithium atoms is too small, which may influence the electrochemical performance of the anode material.

In some embodiments of the present application, the coating layer includes a carbon material. Coating with the carbon material can isolate the contact between the silicon-based core and external water, and improve the conductivity of the anode material.

In some embodiments of the present application, the anode material includes an oxide which is present at least partially on the surface of the silicon-based core. In other embodiments, the oxide forms an oxide layer at least partially present on the surface of the silicon-based core of the anode material. Further preferably, the oxide includes a silicon oxide having a general formula SiOₓ, where 0<x≤2.

It will be appreciated that it is difficult to cover the silicon-based core completely with the coating layer of carbon material on the surface of the anode material, so there must be a part of the silicon-based core exposed to contact with the outside; and after the anode material is subjected to oxidation, the exposed active silicon on the surface of the silicon-based core can be easily oxidized into a silicon oxide and form an oxide layer. The oxide layer is at least partially present on the surface of the silicon-based core of the anode material. Strictly speaking, one part of the oxide layer is formed and sandwiched between the silicon-based core and the coating layer of carbon, while the other part of the oxide layer is directly exposed to the air. In some special cases, in addition to the silicon oxide, the oxide layer formed by the oxidation may further contain lithium-containing oxide due to residual Li metal on the surface of the silicon-based core.

In some embodiments of the present application, the anode material has a pH of 8 to 11.5, which may be, for example, 8, 8.5, 9, 9.5, 10, 10.5, 11, 11.5, or any value between 8 and 11.5.

It will be appreciated that in the present application, the silicon-based core is oxidized to some extent due to the oxide on the surface of the silicon-based core, which reduces the contact between the lithium silicate in the silicon-based core and water, and further reduces the pH of the anode material. The anode material of higher alkalinity may destroy the structure of a high polymer binder in the slurry, causing crosslinking failure and reduced stripping force of the electrode sheet. A lower alkalinity can help to slow down a reaction rate of an aqueous solvent with the lithium silicate and the active silicon in the anode material to generate gas, and further improve the stability of the electrode sheet.

In some embodiments of the present application, after being placed for 168h, an anode slurry containing the anode material has a viscosity change no greater than 3000 mPa·s.

It should be noted that when the anode material of the present application is used for preparing an anode slurry, in addition to the silicon-based core, the anode material further includes the outermost coating layer and the oxide formed by oxidization on the surface of the silicon-based core, and the double protection of the oxide and the outermost coating layer can greatly delays and inhibits the hydrolysis reaction of lithium silicate in the anode material, so that the moisture in the anode slurry will not be excessively consumed. Therefore, the anode slurry is relatively stable during standing, and has relatively small viscosity changes, for example, not greater than 3000 mPa·s, even after standing for 7 days.

A second aspect of the present application further provides a preparation method for the anode material as described above, including: reacting a pre-lithiated silicon-based material having a coating layer with an oxidizing agent to obtain the anode material.

In some embodiments of the present application, the oxidizing agent includes at least one of oxygen, air, hypochlorous acid, hypochlorite, ferric ion-containing salts, copper ion-containing salts, or hydrogen peroxide. The selected oxidizing agent can oxidize the surface layer of the pre-lithiated silicon-based material to improve the oxidation degree, thereby achieving the expected proportions of lithium, oxygen and silicon contents.

In some embodiments of the present application, the pre-lithiated silicon-based material having the coating layer is reacted with the oxidizing agent for 1h to 12h, which may be, for example, 1h, 2h, 3h, 5h, 8h, 10h, 12h, or any value between 1h and 12h.

In some embodiments of the present application, a mass ratio of the pre-lithiated silicon-based material having the coating layer to the oxidizing agent is 100:1.5 to 100:5, which may be, for example, 100:1.5, 100:2, 100:3, 100:4, 100:4.5, 100:5, or any value between 100:1.5 and 100:5.

In some embodiments of the present application, after the reaction with the oxidizing agent is finished, the method further includes: performing heat treatment on the resulting product of the reaction to obtain the anode material. Further, the heat treatment includes: in an inert gas atmosphere, heating up to 400°C to 800°C, which may be, for example, 400°C, 500°C, 600°C, 700 °C, 800°C or any other value between 400°C to 800°C, and keeping the temperature for 4h to 24h, which may be, for example, 4h, 8h, 12h, 15h, 20h, 24h or any other value between 4h and 24h.

It will be appreciated that the heat treatment on the pre-lithiated silicon-based material having the coating layer after the oxidation reaction can further enhance the coating effect of the coating layer on the surface of the silicon-based material, and improve strength of the anode material.

In some embodiments of the present application, a method for preparing a pre-lithiated silicon-based material having a coating layer includes: mixing and sintering a silicon-based material with a carbon source to obtain a carbon-coated silicon-based material, and performing pre-lithiation on the carbon-coated silicon-based material with a lithium source to obtain the pre-lithiated silicon-based material with the coating layer.

In some embodiments of the present application, the present application further provides another method for preparing a pre-lithiated silicon-based material having a coating layer, including: reacting a silicon-based material with a lithium source to obtain the pre-lithiated silicon-based material, and then mixing and sintering the pre-lithiated silicon-based material with a carbon source to obtain the pre-lithiated silicon-based material with the coating layer.

In some preferred embodiments, the carbon source includes at least one of alkane, alkene, alkyne, natural gas, toluene, glucose, sucrose, polyvinyl pyrrolidone, polyvinyl alcohol, polyethylene glycol, polyvinylidene fluoride or coal pitch.

It should be noted that when a silicon-based material is selected for use in preparation, a silicon oxide material, such as a SiO material, is often selected; and when a carbon source is used for preparing the coating layer, a gas phase coating process, a liquid phase coating process, or a solid phase coating process may be selected. The gas phase coating process typically includes performing chemical vapor deposition on methane, acetylene and other gases to obtain a carbon coating layer; while the liquid phase coating process and the solid phase coating process include selecting a non-gaseous substance, such as glucose, sucrose or the like, as a carbon source.

In some embodiments, the carbon-coated SiO material is 100% by mass, and the carbon has a mass fraction of 2% to 8%, for example, 2%, 3%, 4%, 5%, 6%, 7%, 8%, or any value between 2% and 8%.

In some preferred embodiments, the selected lithium source used in the pre-lithiation includes at least one of lithium hydride, LiOH, lithium metal, or lithium-containing organics.

In some embodiments, a mass ratio of the carbon-coated SiO material to the lithium source is 100:11 to 100:36, which may be, for example, 100:11, 100:15, 100:20, 100:25, 100:30, 100:36, or any value between 100:11 and 100:36.

In some preferred embodiments, performing the pre-lithiation includes: in an inert gas atmosphere, heating up to 500°C to 1000°C, which may be, for example, 500°C, 600°C, 800°C, 900°C, 1000°C, or any value between 500°C and 1000°C, and keeping the temperature for 2h to 10h, which may be, for example, 2h, 4h, 6h, 8h, 10h, or any value between 2h and 10h.

In a specific example, the preparation method of the present application includes:
mixing and sintering a silicon-based material with a carbon source to obtain a carbon-coated silicon-based material, and performing pre-lithiation on the carbon-coated silicon-based material with a lithium source to obtain the pre-lithiated silicon-based material with the coating layer, where a mass ratio of the carbon-coated SiO material to the lithium source is 100:11 to 100:36, and performing the pre-lithiation includes: in an inert gas atmosphere, heating up to 500 °C to 1000°C; and
reacting a pre-lithiated silicon-based material having a coating layer with an oxidizing agent, and performing heat treatment to obtain the anode material, where the oxidizing agent includes at least one of oxygen, air, hypochlorous acid, hypochlorite, ferric ion-containing salts, copper ion-containing salts, or hydrogen peroxide, the pre-lithiated silicon-based material having the coating layer is reacted with the oxidizing agent for 1h to 12h, a mass ratio of the pre-lithiated silicon-based material having the coating layer to the oxidizing agent is 100:1.5 to 100:5, and the heat treatment includes: in an inert gas atmosphere, heating up to 400°C to 800°C, and keeping the temperature for 4h to 24h.

In the above preparation method, an oxidizing agent is used to promote in-situ oxidation reaction on the surface of the pre-lithiated silicon-based material, which can increase the oxygen content in the surface layer of the anode material, reduce the reaction of the core material with external moisture, and improve the processability of the anode material. Being simple in process and using raw materials readily available, the preparation method of the present application can be used for large-scale production and preparation.

A third aspect of the present application provides an anode sheet, including the anode material as described above.

In some embodiments of the present application, a preparation method for the anode sheet includes: coating an anode slurry containing the anode material on an anode current collector, and rolling and drying to obtain the anode sheet.

The anode slurry may be prepared according to a common slurry preparation process of batteries, and the anode sheet may also be prepared according to a conventional preparation process of battery electrode sheets. A too high or too low viscosity of the anode slurry may influence the coating process of the electrode sheet. A too high viscosity indicates poor fluidity, which may cause non-uniform coating; while a too low viscosity may cause inadequate thickness of the coating layer, and fail to meet the surface density requirement of the electrode sheet. Therefore, the anode material of the present application can ensure the processability of the anode sheet by limiting the viscosity of the prepared anode slurry within a suitable range.

A fourth aspect of the present application provides a battery, including the anode sheet as described above.

Embodiments of the present application will be described in detail below with reference to specific examples, but those skilled in the art will appreciate that the following examples are only illustrative of the present application and should not be construed as limiting the scope of the present application. The examples, if no specific condition specified, are carried out according to conventional conditions or conditions recommended by the manufacturer. The reagents or instruments used herein, if no manufacturer is specified, are conventional products commercially available.

### Example 1

This example provides an anode material, and a preparation method for the anode material includes:
(1) performing carbon coating on silicon monoxide (SiO) with methane, including: after adding SiO into a rotary furnace, introducing methane, heating up to 1000°C and keeping the temperature for 8h, to obtain a carbon-coated SiO material with a carbon content of 2% to 8%; and then mixing the carbon-coated SiO material with lithium hydride, where a mass ratio of the carbon-coated SiO material to the lithium hydride is 100:12, with a mass content of lithium being 11%, and in an argon atmosphere, heating up to 600°C and keeping the temperature for 6h, to obtain a carbon-coated pre-lithiated SiO material with a mass content of lithium being 10%;
(2) mixing sodium hypochlorite with deionized water to prepare a sodium hypochlorite solution with a concentration of 0.1 mol/L, where a mass ratio of the pre-lithiated silicon-based material having the coating layer to the sodium hypochlorite is 100:1.5; and in a stirring state, dispersing the carbon-coated pre-lithiated SiO material obtained in step (1) into the sodium hypochlorite solution for oxidation for 1h; and
(3) placing the oxidized material in a heat treatment furnace for heat treatment, heating up to 600°C, keeping the temperature for 4h, and dispersing the material after heat treatment to obtain the anode material.

### Example 2

The preparation method for the anode material provided in this example is substantially the same as that of example 1, except that: the sodium hypochlorite in step (2) is replaced with copper chloride, a mass ratio of the pre-lithiated silicon-based material having the coating layer to the copper chloride is 100:5, and the resulting solution has a concentration of 0.2 mol/L.

### Example 3

The preparation method for the anode material provided in this example is substantially the same as that of example 1, except that: the sodium hypochlorite in step (2) is replaced with ferric chloride, a mass ratio of the pre-lithiated silicon-based material having the coating layer to the ferric chloride is 100:3, and the resulting solution has a concentration of 0.1 mol/L.

### Example 4

The preparation method for the anode material provided in this example is substantially the same as that of example 1, except that: the oxidation in step (2) is performed for 4h instead of 1h.

### Example 5

The preparation method for the anode material provided in this example is substantially the same as that of example 1, except that: the oxidation in step (2) is performed for 12h instead of 1h.

### Example 6

The preparation method for the anode material provided in this example is substantially the same as that of example 1, except that: the methane in step (1) is replaced with sucrose.

### Example 7

The preparation method for the anode material provided in this example is substantially the same as that of example 1, except that: the methane in step (1) is replaced with natural gas.

### Example 8

The preparation method for the anode material provided in this example is substantially the same as that of example 1, except that: after the mixture with lithium hydride, the temperature in step (1) is changed from 600°C to 800°C.

### Example 9

The preparation method for the anode material provided in this example is substantially the same as that of example 1, except that: the lithium hydride in step (1) is replaced with metal lithium, and a mass ratio of the carbon-coated SiO material to the metal lithium is 100:11.

### Example 10

The preparation method for the anode material provided in this example is substantially the same as that of example 1, except that: after the mixture with lithium hydride, the temperature in step (1) is kept for 12h instead of 6h.

### Example 11

The preparation method for the anode material provided in this example is substantially the same as that of example 1, except that: the heat treatment in step (3) is performed at 400°C instead of 600°C.

### Example 12

The preparation method for the anode material provided in this example is substantially the same as that of example 1, except that: the heat treatment in step (3) is performed at 800°C instead of 600°C.

### Example 13

The preparation method for the anode material provided in this example is substantially the same as that of example 1, except that: the temperature in step (3) is kept for 12h instead of 4h.

### Example 14

The preparation method for the anode material provided in this example is substantially the same as that of example 1, except that: the temperature in step (3) is kept for 24h instead of 4h.

### Example 15

The preparation method for the anode material provided in this example is substantially the same as that of example 1, except that: the mass ratio of the carbon-coated SiO material to the lithium hydride in step (1) is 100:24, and the mass content of lithium in the obtained carbon-coated pre-lithiated SiO material is 20% instead of 10%.

### Example 16

The preparation method for the anode material provided in this example is substantially the same as that of example 1, except that: the mass ratio of the carbon-coated SiO material to the lithium hydride in step (1) is 100:24, and the mass content of lithium in the obtained carbon-coated pre-lithiated SiO material is 20% instead of 10%, while the oxidation in step (2) is performed for 4h instead of 1h.

### Example 17

The preparation method for the anode material provided in this example is substantially the same as that of example 1, except that: the mass ratio of the carbon-coated SiO material to the lithium hydride in step (1) is 100:36, and the mass content of lithium in the obtained carbon-coated pre-lithiated SiO material is 30% instead of 10%, while the oxidation in step (2) is performed for 12h instead of 1h.

### Comparative example 1

This comparative example provides an anode material, and a preparation method for the anode material includes:
after adding SiO into a rotary furnace, introducing methane, heating up to 1000°C and keeping the temperature for 8h, to obtain a carbon-coated SiO material with a carbon content of 2% to 8%; and then mixing the carbon-coated SiO material with lithium hydride, where a mass ratio of the carbon-coated SiO material to the lithium hydride is 100:12, in an argon atmosphere, heating up to 600°C and keeping the temperature for 6h, to obtain a carbon-coated pre-lithiated SiO material with a mass content of lithium being 10%.

### Comparative example 2

This comparative example provides an anode material, and a preparation method for the anode material is substantially the same as that in comparative example 1, except that the mass content of lithium in the obtained carbon-coated pre-lithiated SiO material is 30% instead of 10%.

Element content and pH tests are performed on the anode materials prepared in the above examples and comparative examples, and the test results are shown in table 1.

A method for testing the mass content of Li in the anode material uses full-dissolution ICP measurement, which specifically includes: calcinating 0.5g of the anode material in air at 750 °C for 2 hours to completely remove the carbon therein, then completely dissolving the material in a mixed acid of HCl/HNO₃/HF and diluting the mixture in a 100 mL plastic volumetric flask, and finally testing the Li content with an ICP spectrometer (Agilent 5800VDV ICP-OES).

A method for testing the mass content of O in the anode material uses an ONH elemental analyzer (ONH-2000), which specifically includes: placing the weighed anode material in a graphite crucible, and then taking the anode material into the ONH elemental analyzer for testing, to obtain the mass content of O in the anode material. A ratio of the mass content of O to the mass content of Li from the ICP spectrometer is calculated to obtain an A value.

A method for testing the atom counts of Si, Li and O on the surface layer of the anode material uses an X-ray photoelectron spectrometer (Thermo Scientific K-Alpha), where the excitation source is Al Kalpha rays, with a beam spot of 400 µm, a pass energy for full-spectrum scanning being 100 eV, and a step of 1 eV, and finally, the full-spectrum scanning data is analyzed through Avantage software to obtain a B value representing an atomic ratio of O to Si, and a C value representing an atomic ratio of O to Li.

A method for testing the pH of the anode material includes: dispersing 5g of the anode material ultrasonically in 45g of water, and then measuring with a pH meter.

In addition, the anode materials obtained in examples 1 to 17 and comparative examples 1 to 2 are used as anode active materials, and mixed homogeneously according to a mass ratio of anode active material: sodium carboxymethylcellulose (CMC): styrene-butadiene rubber (SBR) = 96.5:1.5:2, before being coated on a copper foil current collector and dried to obtain an anode sheet for later use.

Firstly, a button cell test is performed on the obtained electrode sheet, where a battery is assembled in an argon glove box, with a metal lithium sheet as the anode, 1 mol/L LiPF₆+ ethylene carbonate (EC) + ethyl methyl carbonate (EMC) as the electrolyte, and a polyethylene/propylene composite microporous membrane as the separator, and an electrochemical performance test is performed on a battery test instrument, with a battery capacity set to the standard 480 mAh/g, a charge/discharge voltage set to 0.01V to 1.5V, and a charge/discharge rate set to 0.1C. The test results of the electrochemical performance are shown in table 2.

A viscosity test of the anode slurry includes: using a rheometer to test a viscosity of the slurry in a dynamic viscosity test (rotational mode), with a shear rate ranging from 0.1s⁻¹ to 300 s⁻¹. The test instrument is HAAKE MARS60 Anton Paar MCR302 HAAKE MARS4.

A test of gas production of the anode slurry includes: after the slurry is prepared, weighing and sealing 20g of the slurry in an aluminum-plastic film, storing the slurry at room temperature for 168h, and measuring a volume change of the aluminum-plastic film before and after storage by a drainage method to obtain the gas production of the slurry.

The test results of the viscosity and gas production of the anode slurry are shown in table 1. FIG. 1 shows a changing process of the anode slurry prepared in example 1 from day 1 to day 7 after standing at a low shear rate (0.1s⁻¹-300s⁻¹).

**Table 1 Test results of examples and comparative examples**

| Sample(s) | A Value | B value | B:A | C value | C:A | pH | Gas production over 168h (ml) | Viscosity change before and after 168h (mPa·s) |
|---|---|---|---|---|---|---|---|---|
| Example 1 | 2.9 | 40.43 | 13.94 | 6.23 | 2.15 | 10.5 | 0 | 260 |
| Example 2 | 2.9 | 32.88 | 11.34 | 6.51 | 2.24 | 10.6 | 0 | 310 |
| Example 3 | 2.9 | 51.35 | 17.71 | 6.28 | 2.17 | 10.5 | 0 | 310 |
| Example 4 | 3.1 | 82.59 | 26.64 | 6.79 | 2.19 | 10.3 | 0 | 240 |
| Example 5 | 3.1 | 90.52 | 29.20 | 7.51 | 2.42 | 10.3 | 0 | 230 |
| Example 6 | 3.0 | 5.48 | 1.83 | 6.35 | 2.12 | 10.6 | 0 | 670 |
| Example 7 | 3.0 | 6.71 | 2.24 | 6.22 | 2.07 | 10.6 | 0 | 710 |
| Example 8 | 2.8 | 11.33 | 4.05 | 7.14 | 2.55 | 10.5 | 1 | 410 |
| Example 9 | 2.9 | 21.34 | 7.36 | 7.24 | 2.50 | 10.8 | 0 | 560 |
| Example 10 | 2.9 | 13.37 | 4.61 | 7.39 | 2.55 | 10.7 | 0 | 580 |
| Example 11 | 2.9 | 3.45 | 1.19 | 1.86 | 0.64 | 11.1 | 3 | 1310 |
| Example 12 | 2.9 | 3.95 | 1.36 | 2.14 | 0.74 | 11.4 | 3 | 1160 |
| Example 13 | 2.9 | 4.34 | 1.50 | 5.23 | 1.80 | 11.4 | 5 | 1580 |
| Example 14 | 2.9 | 4.32 | 1.49 | 1.69 | 0.58 | 11.2 | 5 | 1030 |
| Example 15 | 1.3 | 42.95 | 33.95 | 0.85 | 0.65 | 11.9 | 11 | 2020 |
| Example 16 | 1.4 | 120.15 | 85.82 | 15.42 | 11.01 | 10.6 | 12 | 1450 |
| Example 17 | 0.67 | 66.58 | 99.37 | 1.32 | 1.97 | 10.5 | 10 | 1710 |
| Comparative example 1 | 2.9 | 1.17 | 0.40 | 1.33 | 0.46 | 12.5 | >20 | 4700 |
| Comparative example 2 | 0.65 | 70.27 | 108.10 | 0.32 | 0.49 | 12.9 | >20 | 6080 |

**Table 2 Electrochemical test results of examples and comparative examples**

| Sample(s) | Reversible specific capacity (mAh/g) | ICE (%) | Capacity retention after 50 cycles (%) |
|---|---|---|---|
| Example 1 | 1410 | 92.1 | 94.5 |
| Example 2 | 1401 | 91.9 | 93.2 |
| Example 3 | 1405 | 91.5 | 93.4 |
| Example 4 | 1343 | 89.3 | 91.6 |
| Example 5 | 1269 | 89.9 | 91.0 |
| Example 6 | 1387 | 91.5 | 90.0 |
| Example 7 | 1380 | 91.6 | 91.2 |
| Example 8 | 1390 | 92.6 | 90.5 |
| Example 9 | 1421 | 92.3 | 92.1 |
| Example 10 | 1389 | 91.7 | 92.5 |
| Example 11 | 1331 | 90.5 | 91.3 |
| Example 12 | 1340 | 90.1 | 91.6 |
| Example 13 | 1321 | 91.0 | 92.0 |
| Example 14 | 1310 | 90.8 | 90.5 |
| Example 15 | 1280 | 91.7 | 88.3 |
| Example 16 | 1401 | 91.8 | 87.9 |
| Example 17 | 1389 | 91.6 | 86.3 |
| Comparative example 1 | 1452 | 85.3 | 85.0 |
| Comparative example 2 | 1306 | 86.8 | 79.1 |

The results in tables 1 and 2 show that: after treating the pre-lithiated silicon oxide material with the oxidizing agent, the present application can oxidize active Si particles and residual lithium exposed on the surface of the material to generate an oxide layer. Compared with comparative examples 1 to 2, examples 1 to 17 all involve surface treatment with an oxidizing agent, and obtain a better gas production result than comparative example 1 when B:A is in the range of 1 to 100.

Examples 1, 2 and 3 use different oxidizing agents respectively and obtain similar degrees of surface treatment, thereby showing similar test results. Due to prolonged oxidation, each of examples 4 and 5 obtains a thicker and denser oxide layer and a gas production result being 0, the same as that in examples 1 to 3, while the capacity is somewhat reduced. In examples 6 and 7, the carbon source in the coating layer is changed, which has little effect on the gas production result, but slightly higher effects on the capacity, the ICE and the cycle performance. In example 8, the pre-lithiation reaction temperature is changed so that the reaction is more vigorous and complete, and the ICE is higher, while other properties are hardly affected. In example 9, the lithium source is changed, and the overall performance is similar to that of example 1. In example 10, the pre-lithium reaction time is increased without a major influence on performance. In examples 11, 12, 13 and 14, the temperature and time of the heat treatment are changed, and when the heat treatment conditions are changed, the outer layer oxidation will be damaged to some extent as the temperature and time increase, and thereby affect the gas production performance to some extent. In example 15, the amount of pre-lithiation is increased so that the ICE is improved, but the gas production performance is somewhat affected and reduced. In examples 16 and 17, the oxidation reaction time is prolonged while the amount of pre-lithiation is increased, and the gas production performance is improved relative to the comparative examples, but still does not reach the best level for there is still a small amount of gas production. In comparative example 1, due to the absence of oxidation, the capacity and the ICE are both relatively high, while the gas production performance is poor, the pH is high, and the slurry has a large viscosity change, resulting in poor processability. In comparative example 2, due to a greatly increased amount of pre-lithiation, the pre-lithiated product is not stable in performance, and exhibits poor gas production, capacity and cycle performance.

Finally, it should be noted that: the above examples are only used to illustrate the technical solutions of the present application, and not to limit the present application; although the present application has been described in detail with reference to the foregoing examples, it should be understood by those of ordinary skill in the art that: the technical solutions described in the foregoing examples may still be modified, or some or all of the technical features therein may be equivalently replaced; and these modifications or substitutions do not make the corresponding technical solution essentially depart from the scope of the technical solutions of the examples of the present application.

Moreover, those skilled in the art will appreciate that although some examples described herein include some but not other features included in other examples, combinations of features of different examples are meant to be within the scope of the present application and form different examples. For example, any of the above claimed examples may be used in any combination. The information disclosed in the background section is only for enhancement of understanding of the general background of the present application, and should not be taken as an acknowledgment or any form of suggestion that this information forms the existing art that is already well known to a person skilled in the art.

## Claims

1. An anode material, **characterized in** comprising: a silicon-based core, and a coating layer at least partially coated on a surface of the silicon-based core;
the silicon-based core contains silicon and lithium silicate, and the anode material satisfies that a ratio B:A is 1 to 100, where A is a mass ratio of oxygen to lithium in the anode material, and B is an atomic ratio of oxygen to silicon obtained by test with an X-ray photoelectron spectrometer on the anode material.

2. The anode material of claim 1, **characterized in that** the anode material includes an oxide which is present at least partially on the surface of the silicon-based core.

3. The anode material of claim 2, **characterized in that** at least part of the oxide forms an oxide layer on the surface of the silicon-based core.

4. The anode material of claim 1, **characterized in that** the lithium silicate includes at least one of Li₂SiO₃, Li₂Si₂O₅ or Li₄SiO₄.

5. The anode material of claim 1, **characterized in that** the anode material has a pH of 8 to 11.5.

6. The anode material of claim 1, **characterized in that** the anode material has an A value of 1 to 20.

7. The anode material of claim 1, **characterized in that** the anode material has a B value of 1 to 100.

8. The anode material of claim 1, **characterized in that** when the anode material satisfies B > A > 1, the ratio B:A is 2 to 30.

9. The anode material of claim 1, **characterized in that** through the X-ray photoelectron spectrometer test on the anode material, an atomic ratio C of oxygen to lithium is obtained, where C value is 1 to 10.

10. The anode material of claim 1, **characterized in that** after being placed for 168h, an anode slurry containing the anode material has a viscosity change no greater than 3000 mPa·s.

11. The anode material of claim 2, **characterized in that** the oxide includes a silicon oxide having a general formula SiOₓ, where 0<x≤2.

12. The anode material of claim 9, **characterized in that** the anode material further satisfies that a ratio C:A is 0.5 to 10.

13. The anode material of any one of claims 1 to 12, **characterized in that** the coating layer includes a carbon material.

14. A preparation method for the anode material according to any one of claims 1 to 13, **characterized in** comprising:
reacting a pre-lithiated silicon-based material having a coating layer with an oxidizing agent to obtain the anode material.

15. A battery, **characterized in** comprising the anode material of any one of claims 1 to 13.
